# EUROPEAN PATENT APPLICATION

(11) **EP 2 426 925 A2**
(43) Date of publication of application: **07.03.2012**
(21) Application number: 11157028.9
(22) Date of filing: 04.03.2011
(51) Int. Cl.: H04N 9/31

(54) **Image display apparatus**

(30) Priority: 02.09.2010 JP 2010196383; 01.10.2010 JP 2010223747
(71) Applicant: Panasonic Corporation, Kadoma-shi Osaka 571-8501 (JP)
(72) Inventor: Enomoto, Hirofumi, Osaka-shi, Osaka 540-6207 (JP); Suyama, Kohei, Osaka-shi, Osaka 540-6207 (JP); Teshima, Yoshihiro, Osaka-shi, Osaka 540-6207 (JP); Jikuya, Nobuo, Osaka-shi, Osaka 540-6207 (JP); Fujimoto, Hitoshi, Osaka-shi, Osaka 540-6207 (JP); Sato, Kaoru, Osaka-shi, Osaka 540-6207 (JP)
(74) Representative: Eisenführ, Speiser & Partner

(57) **Abstract**

The present invention provides an image display apparatus that includes a case having an air inlet port and an exhaust port; a cooling air passage that is formed by connecting the air inlet port and the exhaust port; and an optical unit that is provided within the case. The optical unit includes a red color laser light source, a green color laser light source, and a blue color laser light source, and these laser light sources are positioned in the cooling air passage. Further, the image display apparatus has an air blower that cools the laser light sources of the respective colors by introducing air from the air inlet port and exhausting air from the exhaust port; and a lens that is provided on the light-emitting side of the laser light sources. The red color laser light source is positioned closer to an upstream side of the cooling air passage than the green color laser light source and the blue color laser light source. With this, the temperature of the red color laser light source apparatus is not increased by a long period of use, and thereby image quality deterioration is prevented.

## Description

### CROSS-REFERENCE TO RELATED APPLICATIONS

The present application claims priority under 35 U.S.C. §119 of Japanese Application Nos. 2010-196383, filed on September 2, 2010, and 2010-223747, filed on October 1, 2010, the disclosures of which are expressly incorporated by reference herein in their entireties.

### BACKGROUND OF THE INVENTION

### 1. Field of the Invention

The present invention relates to an image display apparatus in which a laser light source apparatus using a semiconductor laser is incorporated.

### 2. Description of Related Art

In recent years, laser light has drawn attention as a light source of an image display apparatus which can perform large-screen display, and technology development of a semiconductor laser has been promoted to form this laser light. Compared with a ultra-high pressure mercury lamp (UHP lamp) conventionally used as a light source of an image display apparatus or a light-emitting diode (LED) recently used in a small-sized image display apparatus, a light source using a semiconductor laser light source has advantages including good color reproducibility, instant light up, long life, and high efficiency in electrical/optical conversion.

Hereinafter, a conventional laser light source apparatus will be explained. As described in Japanese Patent Application Publication No. 2010-32796, for example, the conventional light source apparatus has a red color laser light source, a blue color laser light source, and a green color laser light source as short-wavelength laser light sources which consecutively emit red color (R) laser light, blue color (B) laser light, and green color (G) laser light, respectively. The red color laser light source and the blue color laser light source are semiconductor lasers which emit red color laser light and blue color laser light, respectively. The green color laser light source has a structure in which wavelength conversion is performed to laser light of the semiconductor laser so as to emit green color laser light.

The above-described conventional image display apparatus uses three color laser light as light sources, and projects images having good color reproducibility. In the conventional image display apparatus, however, the quality of projected images deteriorates as the image display apparatus is used for a long period of time. The three laser light sources have different temperature characteristics. Basically, temperature increase of the laser light sources will cause decrease of the output. Output from the red color laser light source apparatus is especially decreased corresponding to its temperature increase. Consequently, output from the red color laser light source apparatus is easily decreased due to the temperature increase caused by a long period of use of the conventional image display apparatus. When one of the three color laser light is decreased in this manner, the conventional image display apparatus cannot output high-quality images.

### SUMMARY OF THE INVENTION

An advantage of the present invention is to provide an image display apparatus in which especially the temperature of the red color laser light source apparatus is not increased by a long period of use, and thereby image quality deterioration is prevented.

In view of the above circumstances, the present invention provides an image display apparatus which includes the following. Specifically, the image display apparatus includes a case that has an air inlet port and an exhaust port; a cooling air passage that is formed by connecting the air inlet port and the exhaust port; and an optical unit that is provided within the case. The optical unit includes a red color laser light source, a green color laser light source, and a blue color laser light source, and these laser light sources are positioned in the cooling air passage. Further, the image display apparatus has an air blower that cools the laser light sources of the respective colors by introducing air from the air inlet port and exhausting air from the exhaust port; and a lens that is provided on the light-emitting side of the laser light sources. The red color laser light source is positioned closer to an upstream side of the cooling air passage than the green color laser light source and the blue color laser light source.

Another advantage of the present invention is, in addition to the above-described advantage, to achieve an image display apparatus that can freely change the direction of projecting images. Another advantage is to achieve smooth rotation at the time of changing the projecting direction. For this purpose, a second case having an exhaust port is rotatably provided to a first case having an air inlet port, and a cooling air passage is provided in the first case.

With this, since the air blower is not included in the second rotatable case, the second case can be made compact and light, which can achieve smooth rotation.

Another advantage of the present invention is to provide an image display apparatus that can perform efficient heat dissipation by shortening the cooling air passage. For this purpose, a second case having an air inlet port and an exhaust port is rotatably provided to a first case, and a cooling air passage is provided in the second case. With this, since the cooling air passage is formed only in the second case that rotates and has the optical unit, the cooling air passage can be shortened and heat dissipation can be performed efficiently.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a schematic perspective view of a main body of an image display apparatus according to embodiment 1 of the present invention;
Fig. 2 is a schematic perspective view of the image display apparatus according to embodiment 1 of the present invention;
Fig. 3 is a schematic perspective view of a tilted state of the image display apparatus according to embodiment 1 of the present invention;
Fig. 4 illustrates an example where the image display apparatus according to embodiment 1 of the present invention is incorporated in an electronic device;
Fig. 5 is a schematic perspective view illustrating an internal configuration of the image display apparatus according to embodiment 1 of the present invention;
Fig. 6 illustrates an example of a cooling air passage of the image display apparatus according to embodiment 1 of the present invention;
Fig. 7 illustrates a relationship between the temperature and the output of the laser light source apparatuses of the respective colors according to the present invention;
Fig. 8 illustrates an example of a cooling air passage of the image display apparatus according to embodiment 2 of the present invention;
Fig. 9 is a schematic perspective view of a tilted state of the image display apparatus according to embodiment 3 of the present invention;
Fig. 10 is a schematic perspective view illustrating an internal configuration of the image display apparatus according to embodiment 3 of the present invention;
Fig. 11 is a schematic perspective view illustrating an internal assembly of the image display apparatus according to embodiment 3 of the present invention;
Fig. 12 illustrates an example of a cooling air passage of the image display apparatus according to embodiment 3 of the present invention; and
Fig. 13 illustrates an example where the image display apparatus according to embodiment 3 of the present invention is incorporated in an electronic device.

### DET AILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

### Embodiment 1

Hereinafter, embodiment 1 of the present invention will be explained with reference to the drawings.

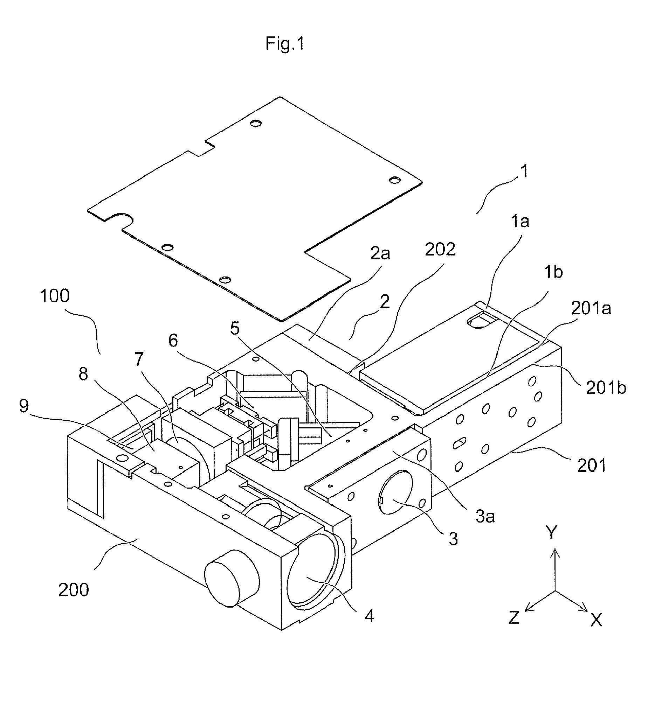

First, the configuration of the image display apparatus main body will be explained with reference to Fig. 1. Fig. 1 is a schematic perspective view of the image display apparatus main body according to embodiment 1 of the present invention.

In Fig. 1, the image display apparatus main body 100 uses laser light as a light source and performs magnification and projection on the screen. The image display apparatus main body 100 has three light sources, that is, a green color laser light source apparatus 1, a red color laser light source apparatus 2, and a blue color laser light source apparatus 3. The image display apparatus main body 100 displays an image with the three-color laser light source apparatuses 1-3.

The green color laser light source apparatus 1 mainly outputs green color laser light by converting non-visible infrared fundamental laser light to a half wavelength. A green color laser holder 1a is a case for the green color laser light source apparatus 1, and fixes each element (for example, a semiconductor laser that outputs infrared fundamental laser light, and the like) that is accommodated in the green color laser holder 1 a.

The red color laser light source apparatus 2 outputs red color laser light, and a red color laser holder 2a is a case for the red color laser light source apparatus 2. The red color laser holder 2a retains a semiconductor laser that outputs red color laser light.

The blue color laser light source apparatus 3 outputs blue color laser light, and a blue color laser holder 3a is a case for the blue color laser light source apparatus 3. The blue color laser holder 3a retains a semiconductor laser that outputs blue color laser light.

Here, the position arrangement of the green color laser light source apparatus 1, the red color laser light source apparatus 2, and the blue color laser light source apparatus 3 will be described in detail. The blue color laser light source apparatus 3 is provided in a plane of a main body case 200 where a projecting lens 4 is retained, and laser light from the blue color laser light source apparatus 3 is guided inside the main body case 200.

The green color laser light source apparatus 1 and the red color laser light source apparatus 2 are provided in a plane perpendicular to the plane, where the projecting lens 4 and the blue color laser light source apparatus 3 are provided, on a side of the blue color laser light source apparatus 3.

The main body case 200 has a protrusion 201 so as to extend the plane where the projecting lens 4 and the blue color laser light source apparatus 3 are provided in a direction where the green color laser light source apparatus 1 is provided. In other words, the protrusion 201 is provided integrally with the main body case 200 on a corner of the main body case 200. Although the protrusion 201 may be provided as a separate member from the main body case 200, it is preferable that the protrusion 201 is provided integrally with the main body case 200 because heat dissipation can be facilitated.

A fixing plane 1b of the green color laser holder 1a is arranged to contact a plane 201a of the protrusion 201. Elements such as an SHG (second harmonic generation) element, a semiconductor laser, and the like, inside the green color laser light source apparatus 1 are fixed to the fixing plane 1b of the green color laser holder 1a. The plane 201a is a plane that contacts the fixing plane 1b in the protrusion 201.

The green color laser light source apparatus 1 does not contact a plane 202 of the main body case 200 so as not to directly transfer heat to the plane 202 of the main body case 200, and a predetermined gap (0.5 mm or less in this embodiment) is provided. Further, since the red color laser light source apparatus 2 requires about 0.3 mm as an optical axis adjustment range, the distance between the green color laser light source apparatus 1 and the red color laser light source apparatus 2 is 0.3 mm or more.

The reason why the predetermined gap is set to be 0.5 mm or less in this embodiment is as follows. When the predetermined gap increases, the entire image display apparatus becomes large, or the distance between the green color laser light source apparatus 1 and a collimator lens (not shown in the drawing) increases, which causes the use efficiency of light to be deteriorated by diffusion of green color laser light before reaching the collimator lens.

With this, as described below, it is possible to make it difficult for heat from the green color laser light source apparatus 1 to be transferred to the red color laser light source apparatus 2. Consequently, the red color laser light source apparatus 2 having poor temperature characteristics can be used stably.

A dichroic mirror 5 as a light path guide and a dichroic mirror 6 as a light path guide are configured by forming a film that transfers or reflects laser light of a predetermined wavelength on the surface thereof.

A field lens 7 converts the diffused laser light into a converging laser. A PBS 8 (Polarized Beam Splitter) reflects laser light of the respective colors, and directs it to a spatial modulation element 9.

The spatial modulation element 9 adjusts deflection of the laser light of the respective colors to form images. The spatial modulation element 9 used in this embodiment is reflective liquid crystal.

A large-screen image is projected after passing through the projecting lens 4.

The laser light of the respective colors from the laser light source apparatuses 1-3 of the respective colors is collimated by each collimator lens. The collimated laser light of the respective colors is directed toward a diffusing plate by the dichroic mirrors 5 and 6; travels through the diffusing plate, the field lens 7, and the PBS 8 in this order; is reflected on the spatial modulation element 9; and is magnified and projected on a screen by the projecting lens 4.

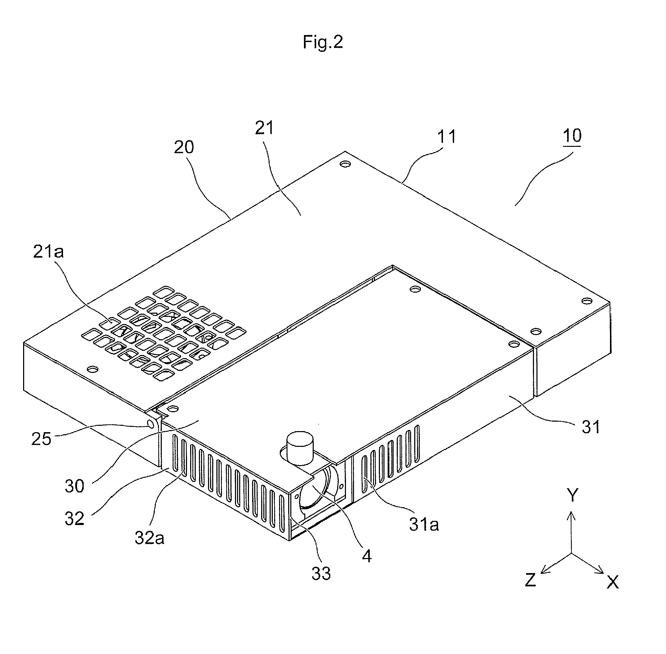

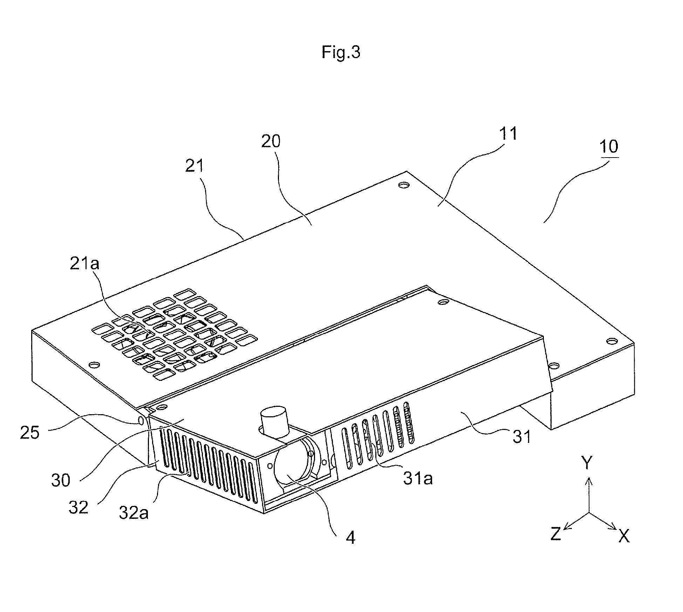

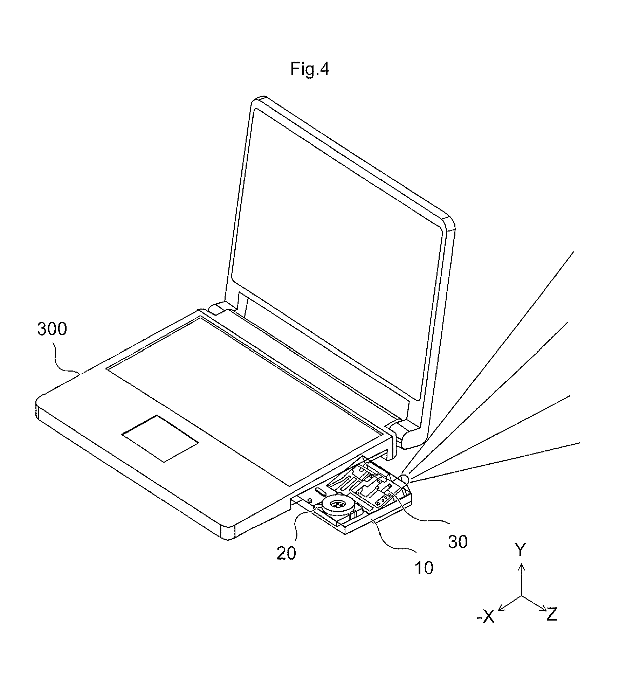

Next, the summary of the image display apparatus according to the present invention will be explained with reference to Figs. 2-4. Fig. 2 is a schematic perspective view of the image display apparatus according to embodiment 1 of the present invention. Fig. 3 is a schematic perspective view of a tilted state of the image display apparatus according to embodiment 1 of the present invention. Fig. 4 illustrates an example where the image display apparatus according to embodiment 1 of the present invention is incorporated in an electronic device.

The image display apparatus 10 has a case 11 that comprises a fixed portion 20 and a tilted portion 30. The fixed portion 20 accommodates a control base, a cooling fan, and the like. An upper surface 21 of the fixed portion 20 is formed in a key shape, and has a plurality of air inlet ports 21a. The cooling fan is provided below the air inlet ports 21a (in a vertical direction of the air inlet ports 21a, that is, a negative direction of arrow Y).

The tilted portion 30 accommodates the above-described image display apparatus main body 100. The tilted portion 30 also accommodates fins, and the like, described below. A side surface 31 of the tilted portion 30 has a plurality of exhaust ports 31a, and a side surface 32 of the tilted portion 30 has a plurality of exhaust ports 32a. The tilted portion 30 has a projection port 33 to project images, and the projecting lens 4 is exposed outside the image display apparatus 10 from the projection port 33.

The cooling fan accommodated in the fixed portion 20 takes in outside air from the air inlet ports 21 a and exhausts the air from exhaust ports 31 a and 32a. Cooling air passages, described below, are formed between the air inlet ports 21 a, and the exhaust ports 31a and 32a. Heat dissipating portions of the laser light source apparatuses 1-3 of the respective colors, accommodated in the tilted portion 30, are interposed in the cooling air passages, thereby promoting heat dissipation of the laser light source apparatuses 1-3 of the respective colors. Here, the air inlet ports 21a side of the cooling air passage is upstream, and the exhaust ports 31a and 32a side of the cooling air passage is downstream.

The air inlet port 21a, the exhaust port 31a and the exhaust port 32a may be plural or singular. The shape of the air inlet port 21a, the exhaust port 31a and the exhaust port 32a may be circular, oval, or polygonal, and it is not limited to a particular shape.

As shown in Fig. 3, the tilted portion 30 is rotatable relative to the fixed portion 20 around a hinge portion (rotation axis) 25. In sum, the tilted portion 30 is rotatable in a direction perpendicular to a direction where the image display apparatus main body 100 projects an image, thereby allowing the projection angle of the projecting lens 4 to be adjusted. Consequently, it is possible to prevent an image projected by the projecting lens 4 from reflecting on an installment surface of the image display apparatus 10.

The image display apparatus 10 may be used as a single body. Alternatively, the image display apparatus 10 may be incorporated in a PC (Personal Computer) 300 as an electronic device as shown in Fig. 4. The image display apparatus 10 can be ejected or retracted with respect to the PC 300 as needed, and the image display apparatus 10 can project displayed output of the PC 300 to a screen, a wall, and the like. Consequently, it is possible to easily project displayed output of the PC 300 to a large screen without connecting a separate image display apparatus to the PC 300 via a wire and the like.

When the image display apparatus 10 is incorporated into the PC 300 (electronic device), the tilted portion 30 is arranged to protrude outside the PC 300 so as to freely rotate. Thus, at least a part of the fixed portion 20 needs to be fixed to the PC 300, and an opposite surface side of the side surface 31 may be fixed to the PC 300. However, in order to secure the air inlet ports 21a, it is preferable that an opposite surface side of the side surface 32 is fixed to the PC 300.

Examples of the electronic device other than the PC 300 include a television, a display, an optical disc player, a portable optical disc player, and the like. Anything to project an image is included. Alternatively, in order to project information of an electrical device (for example, home electrical appliance such as a refrigerator or a washing machine) to the outside, the image display apparatus 10 may be incorporated into such an electrical device.

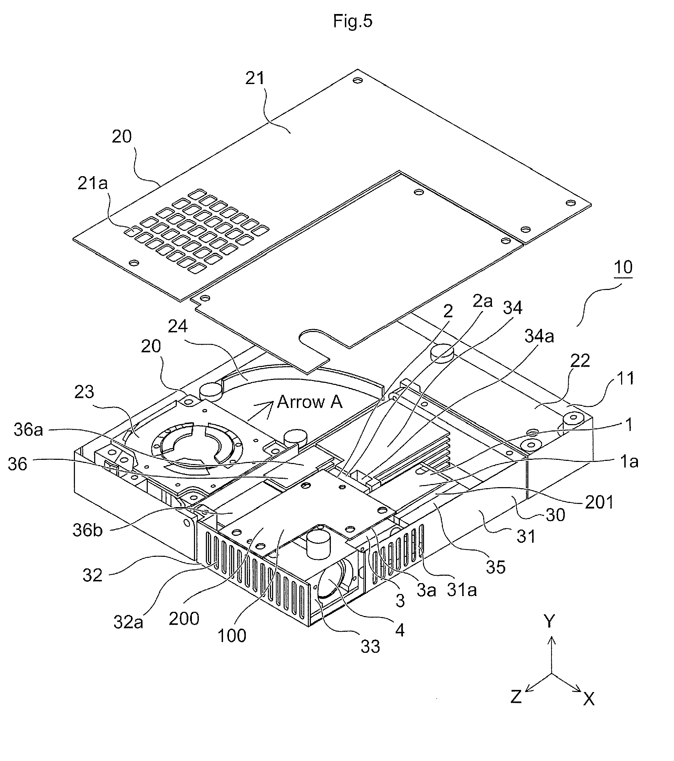

Next, the summary of an internal configuration of the image display apparatus 10 will be explained with reference to Fig. 5. Fig. 5 is a schematic perspective view illustrating the internal configuration of the image display apparatus according to embodiment 1 of the present invention. Each member will be explained below.

A control base 22 performs control to the image display apparatus 10. The control base 22 also serves as a controller of the image display apparatus main body 100 and a cooling fan 23 described below, and serves as an interface portion to electrically connect the PC 300 and the image display apparatus main body 100. Electric source is supplied from the control base 22 to the image display apparatus main body 100 and the cooling fan 23.

The cooling fan 23 takes in and releases air to promote heat dissipation inside the image display apparatus 10. The cooling fan 23 rotates when electric source is supplied. The cooling fan 23 introduces air from the outside of the image display apparatus 10 through the plurality of air inlet ports 21a side, and releases air in a direction of arrow A. The following explanation will be made considering the air released from the cooling fan 23 as cooling air.

A guide 24 is provided on the control base 22 so as to guide the cooling air in a predetermined direction. Here, the guide 24 guides the cooling air released in a direction of arrow A to a fin 34 described below.

The fin 34 is composed of a member having high thermal conductivity. The fin 34 serves as a heat dissipating portion of the red color laser light source apparatus 2, and aids heat dissipation of the red color laser light source apparatus 2. Since the fin 34 is provided adjacent to the red color laser light source apparatus 2 and the tilted portion 30, heat generated from the red color laser light source apparatus 2 is transferred to the fin 34. The fin 34 is cooled by the cooling air released from the cooling fan 23 via the guide 24, and dissipates heat to the tilted portion 30. With this, it is possible to promote the heat dissipation of the red color laser light source apparatus 2. Also, the fin 34 is configured to increase the heat dissipation area (surface area), which makes it possible to receive the cooling air from the cooling fan 23 with a larger area. Consequently, the heat dissipation efficiency of the red color laser light source apparatus 2 can be improved. Here, a red color laser holder 2a and the fin 34 are separate. However, it is preferable that the red color laser holder 2a and the fin 34 are integrally formed so as to improve the thermal conductivity. The red color laser light source apparatus 2 can easily perform heat dissipation by integrally forming the red color laser holder 2a and the fin 34.

A recessed portion 34a is provided to cause a feed terminal of a semiconductor laser accommodated in the red color laser holder 2a to protrude outside of the red color laser holder 2a. Also, the recessed portion 34a ensures a space to connect the feed terminal and a feeder line wired from the control base 22. Although the recessed portion 34a may be penetrated, it is preferable that the recessed portion 34a is not penetrated and keeps a minimum recess to increase the contact area between the red color laser holder 2a and the fin 34. The red color laser holder 2a can transfer heat to the fin 34 more effectively by increasing the contact area.

A fin 35 is composed of a member having high thermal conductivity. The fin 35 serves as a heat dissipating portion of the green color laser light source apparatus 1, and aids heat dissipation of the green color laser light source apparatus 1. The fin 35 contacts the side surface 201b opposite to the side surface 201a of the protrusion 201 that contacts the fixing plane 1b of the green color laser light source apparatus 1, and the fin 35 also contacts the tilted portion 30. Consequently, heat generated from the green color laser light source apparatus 1 is transferred to the fin 35 and the tilted portion 30. The fin 35 is also configured to increase the heat dissipation area (surface area), which makes it possible to improve the heat dissipation efficiency of the green color laser light source apparatus 1. With the above configuration, the heat dissipation of the green color laser light source apparatus 1 can be promoted. Here, the protrusion 201and the fin 35 are separate. However, it is preferable that the protrusion 201 and the fin 35 are integrally formed so as to improve the thermal conductivity. The green color laser light source apparatus 1 can easily perform heat dissipation by integrally forming the protrusion 201 and the fin 35.

A fin 36 is composed of a member having high thermal conductivity. The fin 36 serves as a heat dissipating portion of the image display apparatus main body 100 (in particular, the laser light source apparatuses 1-3 of the respective colors), and aids heat dissipation of the image display apparatus main body 100. The fin 36 has a multilevel stair-step structure which has a higher step portion 36a and a lower step portion 36b. The lower step portion 36b is provided to ensure a space to electrically connect to the image display apparatus main body 100 (for example, the spatial modulation element 9). By connecting the spatial modulation element 9 and the control base 22, the control base 22 can control the spatial modulation element 9. With this, it is possible to form an image to be output by the PC 300. In sum, the image display apparatus main body 100 can project an image to be output by the PC 300.

A whole surface of the higher step portion 36a on the image display apparatus main body 100 side contacts the main body case 200. On the other hand, at least a part of a surface of the lower step portion 36b on the image display apparatus main body 100 side contacts the main body case 200, and the contact part of the surface of the lower step portion 36b is on the higher step portion 36a side.

The reason for limiting the surface of the lower step portion 36b that contacts the main body case 200 is to prevent the spatial modulation element 9 from being cooled actively. Regarding the spatial modulation element 9, it is not sufficient to simply keep the temperature low as is the case with the laser light source apparatuses 1-3 of the respective colors. It is preferable to keep the temperature within a predetermined range. For example, when the temperature of the spatial modulation element 9 reaches 50 °C or more, there is a likelihood that burn-in, not to be projected, will occur to an image projected by the projecting lens 4. Also, when the temperature of the spatial modulation element 9 is around 5-10 °C, the reflectivity of the spatial modulation element 9 will be deteriorated. This affects the quality of a projected image.

Thus, in order not to actively cool the spatial modulation element 9 provided in a negative direction of arrow X with respect to the projecting lens 4, the image display apparatus 10 according to the present embodiment has a configuration where the lower step portion 36b does not contact at least a part of the main body case 200 opposing the spatial modulation element 9. With this, it is possible to prevent the spatial modulation element 9 from being cooled more than necessary.

Here, the main body case 200 and the fin 36 are separate. However, it is preferable that the main body case 200 and the fin 36 are integrally formed so as to improve the thermal conductivity. The main body case 200, that is, the laser light source apparatuses 1-3 of the respective colors can easily perform heat dissipation by integrally forming the main body case 200 and the fin 36.

Heat dissipation of the laser light source apparatuses 1-3 of the respective colors also utilizes the main body case 200 and the fin 36. Since the laser holders 1a-3a of the respective colors contact the main body case 200, heat generated from the laser light source apparatuses 1-3 of the respective colors is transferred to the main body case 200. Further, since the fin 36 contacts the main body case 200, the fin 36 performs heat dissipation of the main body case 200. Also, both of the higher step portion 36a and the lower step portion 36b contact the tilted portion 30. Accordingly, the fin 36 can also perform heat dissipation to the tilted portion 30.

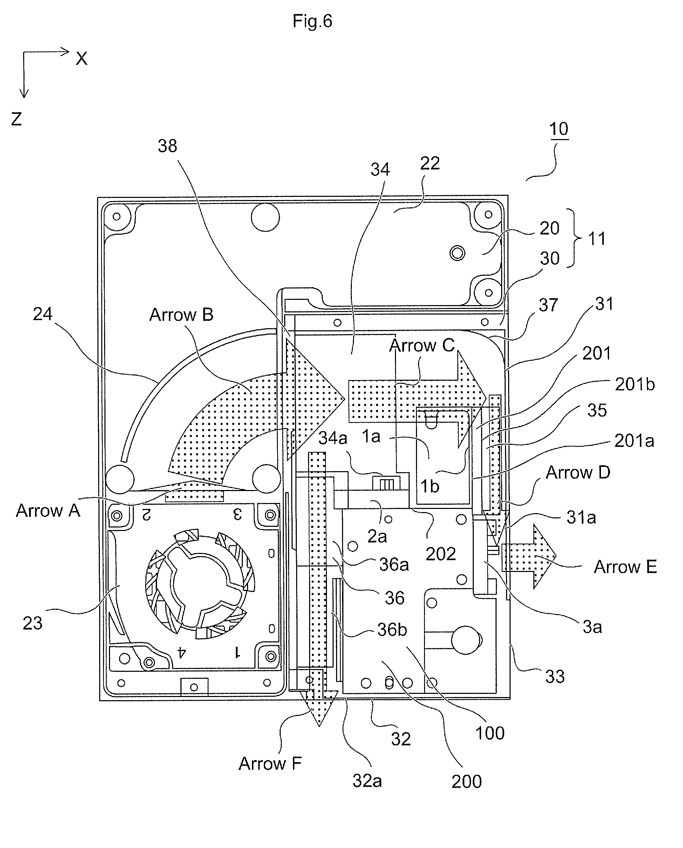

Next, an explanation will be made on a cooling air passage (heat dissipation passage) formed between the air inlet ports 21a, and the exhaust ports 31a and 32a with reference to Fig. 6. Fig. 6 illustrates an example of the cooling air passage of the image display apparatus according to embodiment 1 of the present invention. Incidentally, Fig. 6 is a view obtained by seeing Fig. 5 from a negative direction of arrow Y.

The cooling air passage refers to a course of air in which air taken in from the air inlet ports 21a travels to be exhausted from the exhaust ports 31a and 32a. The present embodiment has first and second cooling air passages. The first cooling air passage is guided in order of arrows A, B, C, D and E, and finally exhausted from the exhaust ports 31a. The second cooling air passage is guided in order of arrows A, B and F, and finally exhausted from the exhaust ports 32a. By cooling the heat dissipating portions of the laser light source apparatuses 1-3 of the respective colors, interposed in the two cooling air passages, with cooling air, heat dissipation of the laser light source apparatuses 1-3 of the respective colors is promoted. In sum, the temperature increase of the laser light source apparatuses 1-3 of the respective colors can be prevented. Hereinafter, the two cooling air passages will be explained.

As explained above, the cooling fan 23 releases air in a direction of arrow A. The cooling air is guided in a direction of the fin 34 by the guide 24. The cooling air passage from the cooling fan 23 to the fin 34 thus becomes as shown in arrow B, and the fin 34 is cooled.

Here, the cooling air passage is divided into a direction of arrow C and a direction of arrow F. The cooling air passage proceeding in the direction of arrow C is a first branch, and the cooling air passage proceeding in the direction of arrow F is a second branch. First, an explanation will be made on a case where the cooling air passage proceeds in the direction of arrow C (first branch).

Since the opening area of the first branch is larger than that of the second branch, the cooling air is introduced mainly in the direction of arrow C. Further, the tilted portion 30 has a guide 37 in the inside thereof, and the guide 37 guides the cooling air, introduced in the direction of arrow C, in a direction of arrow D. With this, the cooling air reaches the fin 35 and cools the fin 35. The cooling air further cools the blue color laser light source apparatus 3 provided between the projecting lens 4 and the fin 35, and is exhausted from the exhaust ports 31a (in a direction of arrow E). The first cooling air passage is formed in this manner (in order of arrows A, B, C, D and E), and the cooling air absorbs heat of the members interposed in the first cooling air passage.

Next, an explanation will be made on a case where the cooling air passage proceeds in the direction of arrow F (second branch).

The cooling air proceeding in the direction of arrow F is cooling air to be guided to the exhaust ports 32a, and also remaining cooling air that does not proceed to the first branch having a larger opening (in the direction of arrow C). The cooling air cools the fin 36 so as to promote heat dissipation of the main body case 200. The cooling air, which has absorbed heat of the fin 36, is released from the exhaust ports 32a.

As explained above, the first cooling air passage is in order of arrows A, B, C, D and E, and the second cooling air passage is in order of arrows A, B and F. Accordingly, the cooling air flowing through the first cooling air passage cools the heat dissipating portion (fin 34) of the red color laser light source apparatus 2, the heat dissipating portion (fin 35) of the green color laser light source apparatus 1, and the heat dissipating portion (blue color laser holder 3a) of the blue color laser light source apparatus 3, in this order. The cooling air flowing through the second cooling air passage cools the fin 36 (image display apparatus main body 100). Specifically, regarding heat dissipation of the laser light source apparatuses 1-3 of the respective colors, priority is given to the red color laser light source apparatus 2, the green color laser light source apparatus 1, and the blue color laser light source apparatus 3, in this order. With this, it is possible to prevent the quality deterioration of an image in the image display apparatus 10.

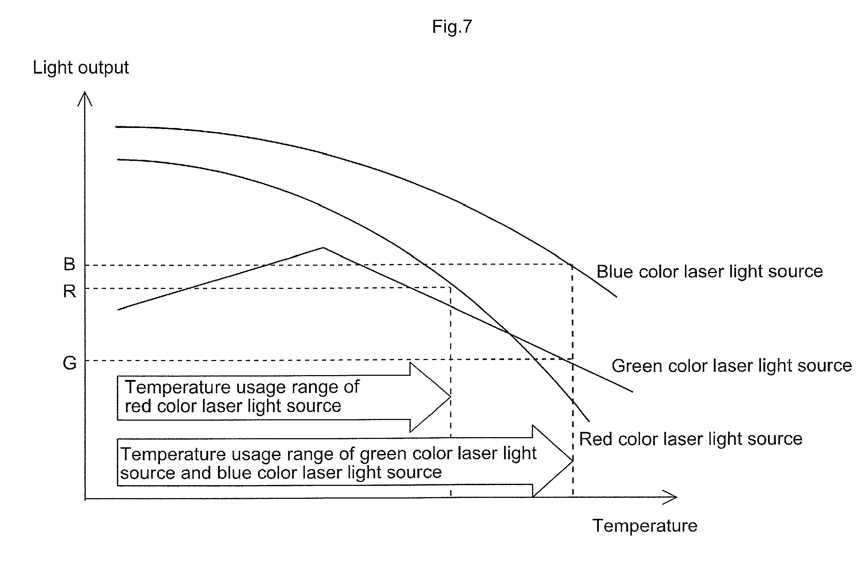

Hereinafter, the reason will be explained in detail with reference to Figs. 5 and 7. Fig. 7 illustrates a relationship between the temperature and the output of the laser light source apparatuses of the respective colors according to embodiment 1 of the present invention.

Fig. 7 illustrates a relationship between the used temperature and the light output of the laser light source apparatuses of the respective colors according to the embodiment of the present invention. First, a more detailed explanation will be made on the reason for giving top priority to heat dissipation of the red color laser light source apparatus 2 (see Fig. 1). As described above, generally, the red color laser light source apparatus 2 has the worst temperature characteristics among the laser light source apparatuses 1-3 of the respective colors. Here, the temperature characteristics refer to characteristics showing the temperature range in which light output more than the minimum requirement of light output can be obtained in the laser light source apparatuses of the respective colors.

The laser light source apparatuses 1-3 of the respective colors have different temperature characteristics. As shown in the characteristics diagram of Fig. 7, basically, the light output of the laser light source apparatuses 1-3 of the respective colors is decreased on the high-temperature side due to increase in the temperature. In particular, the output of the red color laser light source apparatus 2 is decreased first among the laser light source apparatuses 1-3 of the respective colors. Accordingly, since the upper limit of the used temperature of the red color laser light source apparatus 2 is lower than the other laser light source apparatuses, it is preferable to give priority to prevention of temperature increase in the red color laser light source apparatus 2.

For this purpose, the fin 34 is provided in the vicinity of an opening 38 of the image display apparatus main body 100 according to the present embodiment. Specifically, the fin 34, that serves as the heat dissipating portion of the red color laser light source apparatus 2, is provided on the most upstream side among the heat dissipating portions of the laser light source apparatuses 1-3 of the respective colors interposed in the cooling air passages. With this, the cooling air guided into the tilted portion 30 cools the fin 34 before it cools the fin 35, the fin 36, and the blue color laser holder 3a. The cooling air cools the fin 34 before it absorbs heat of the fin 35, the fin 36, and other members of the tilted portion 30. Further, the fin 34 is cooled with large-volume cooling air before divided into arrow C and arrow F. By forming the cooling air passage in this manner, cooling the heat dissipating portion (fin 34) of the red color laser light source apparatus 2 is prioritized. Consequently, it is possible to preferentially prevent the decrease of output of the red color laser light source apparatus 2. The image display apparatus main body 100 can stably output images of high quality.

Next, a detailed explanation will be made on the reason for giving priority to heat dissipation of the green color laser light source apparatus 1 next to the red color laser light source apparatus 2.

Generally, the green color laser light source apparatus 1 requires the largest current value among the laser light source apparatuses 1-3 of the respective colors. As described above, the green color laser light source apparatus 1 mainly outputs green color laser light by converting infrared fundamental laser light to a half wavelength. Laser light emitted from the semiconductor laser passes through various elements (for example, SHG element) before it is converted into green color laser light. Since this causes light loss, the efficiency for converting electricity to light is worse in the green color laser light source apparatus 1 than the red color laser light source apparatus 2 and the blue color laser light source apparatus 3. In sum, the green color laser light source apparatus 1 requires a larger amount of electricity to generate a predetermined amount of output than the red color laser light source apparatus 2 and the blue color laser light source apparatus 3. The green color laser light source apparatus 1 thus has the larger amount of heat generation among the laser light source apparatuses 1-3 of the respective colors. Consequently, heat generated from the green color laser light source apparatus 1 is transferred to the protrusion 201 (i.e., transferred to the main body case 200), which may cause more temperature increase of the red color laser light source apparatus 2 and the blue color laser light source apparatus 3. In such a case, the output of the red color laser light source apparatus 2 and the blue color laser light source apparatus 3 is further decreased.

According to the present embodiment, therefore, the image display apparatus 10 is configured and the cooling air passage is formed such that priority is given to cooling the green color laser light source apparatus 1 next to the red color laser light source apparatus 2. In other words, cooling the green color laser light source apparatus 1 is given more priority than the blue color laser light source apparatus 3. The heat dissipating portion (fin 35) of the green color laser light source apparatus 1 is cooled with cooling air before absorbing heat of the blue color laser light source apparatus 3. Also, one of the reasons for guiding more cooling air to the first branch (in the direction of arrow C) is to preferentially perform heat dissipation to the green color laser light source.

Further, the image display apparatus 10 is configured such that heat of the green color laser light source apparatus 1 is not easily transferred to the other laser light source apparatuses, especially, the red color laser light source apparatus 2. The green color laser light source apparatus 1 contacts the plane 201a of the protrusion 201, and is fixed thereto. Also, as described above, a predetermined gap is provided between the green color laser light source apparatus 1 and the plane 202. The plane 201a where the green color laser light source apparatus 1 contacts the main body case 200 is different from the plane 202 where the red color laser light source apparatus 2 contacts the main body case 200. Specifically, the image display apparatus main body 100 of the present embodiment is configured such that the contact surface between the red color laser light source apparatus 2 and the main body case 200 is distanced from the contact surface between the green color laser light source apparatus 1 and the main body case 200. With this, it is possible to make it difficult for heat generated from the green color laser light source apparatus 1 to be transferred to the red color laser light source apparatus 2, and prevent the decrease of output of the red color laser light source apparatus 2.

Further, the protrusion 201 is provided integrally with the main body case 200 on a corner of the main body case 200. The fin 35 is provided to contact the plane 201b opposite to the plane 201a that contacts the fixing plane 1b of the green color laser light source apparatus 1. Heat generated from the green color laser light source apparatus 1 is easily transferred to the fin 35 through the plane 201b having the largest area in the protrusion 201. Heat generated from the green color laser light source apparatus 1 is thus transferred mainly to the fin 35. The green color laser light source apparatus 1 performs heat dissipation by using the fin 35 mainly. Consequently, heat from the green color laser light source apparatus 1 is prevented from transferring to the red color laser light source apparatus 2, and the temperature increase of the red color laser light source apparatus 2 is prevented. The red color laser light source apparatus 2 can therefore stably output.

In order to perform heat dissipation of the green color laser light source apparatus 1 with the fin 35 thoroughly, that is, in order not to transfer heat generated from the green color laser light source apparatus 1 to the red color laser light source apparatus 2 as much as possible, it is preferable that the protrusion 201 is a separate member from the main body case 200 or separated from the main body case 200. With this, it is possible to make it difficult for heat from the green color laser light source apparatus 1 to be transferred to the main case body 200. Further, it is possible to make it difficult for heat from the green color laser light source apparatus 1 to be transferred to the red color laser light source apparatus 2. When the protrusion 201 is separated from the main body case 200, the protrusion 201 may be fixed to the tilted portion 30, for example.

Next, a detailed explanation will be made on the heat dissipation course of the laser light source apparatuses 1-3 of the respective colors. An explanation will also be made on improvement of heat dissipation in the image display apparatus 10 of the present embodiment based on the above heat dissipation course.

Heat generated from the heat generating portion (semiconductor laser and the like that outputs infrared fundamental laser light) of the green color laser light source apparatus 1 is transferred to the green color laser holder 1a. The heat transferred to the green color laser holder 1a is released from a surface that contacts the cooling air passage, and transferred to the protrusion 201 through the fixing plane 1b and the plane 201a. The heat transferred to the protrusion 201 is transferred to the fin 35 through the plane 201b and transferred to the inside of the main body case 200. Since the fin 35 is provided in the cooling air passage, the heat transferred to the fin 35 is absorbed by the cooling air, and released to the tilted portion 30. Also, since the temperature of the fin 36, cooled with the cooling air, is low, the heat transferred to the inside of the main body case 200 is easily transferred to the fin 36. The heat transferred to the fin 36 is absorbed by the cooling air, and released to the tilted portion 30.

Heat generated from the heat generating portion (semiconductor laser and the like that outputs red color laser light) of the red color laser light source apparatus 2 is transferred to the red color laser holder 2a. The heat transferred to the red color laser holder 2a is transferred to the fin 34 and the main body case 200. Since the fin 34 is provided in the cooling air passage, the heat transferred to the fin 34 is absorbed by the cooling air. The heat of the fin 34 is also released to the tilted portion 30. For the same reason as described above, the heat transferred to the main body case 200 is transferred to the fin 36, absorbed by the cooling air, and released to the tilted portion 30.

Heat generated from the heat generating portion (semiconductor laser and the like that outputs blue color laser light) of the blue color laser light source apparatus 3 is first transferred to the blue color laser holder 3a. Since the blue color laser holder 3a is provided in the cooling air passage, the heat transferred to the blue color laser holder 3a is absorbed by the cooling air. The heat transferred to the blue color laser holder 3a is also transferred to the main body case 200. For the same reason as described above, the heat transferred to the main body case 200 is transferred to the fin 36, and absorbed by the cooling air.

As described above, the laser light source apparatuses 1-3 of the respective colors have a plurality of the heat dissipation courses, and substantially the members in the heat dissipation courses are the heat dissipating portions of the laser light source apparatuses 1-3 of the respective colors. The laser light source apparatuses 1-3 of the respective colors have heat dissipation courses other than the heat dissipating portions (such as the fin 34, the fin 35, and the blue color laser holder 3a provided in the cooling air passage) that mainly perform heat dissipation, and heat dissipation is performed separately. The heat dissipation efficiency of the laser light source apparatuses 1-3 of the respective colors is improved in the manner. For example, the red color laser light source apparatus 2 performs heat dissipation by using the main body case 200 and the tilted portion 30 as well as the fin 34. Likewise, the green color laser light source apparatus 1 and the blue color laser light source apparatus 3 perform heat dissipation by using the main body case 200 and the tilted portion 30. Further, heat of the main body case 200 is dissipated by the fin 36.

As described above, the image display apparatus 10 of the present invention is configured and the cooling air passage is formed in terms of the temperature characteristics and the heat generation amount of the laser light source apparatuses 1-3 of the respective colors. With this, it is possible to prevent the image quality deterioration of the image display apparatus 10 by a long period of use. That is, the image display apparatus 10 can stably output images of high quality.

Naturally, a fin may be provided in the blue color laser holder 3a, and another fin may be provided in the negative direction of arrow Z of the green color laser holder 1a in addition to the fin 35. The fins 34-36 do not need to contact the tilted portion 30. The configuration of the fins 34-36 may be a pinholder shape or a staged shape, and is not limited to a particular one. Also, in the present embodiment, the cooling air passage is divided into the first branch and the second branch in the fin 34. However, this division may be performed on the upstream side or the downstream side of the cooling air passage relative to the fin 34. The tilted portion 30 may be integral with the main body case 200.

### Embodiment 2

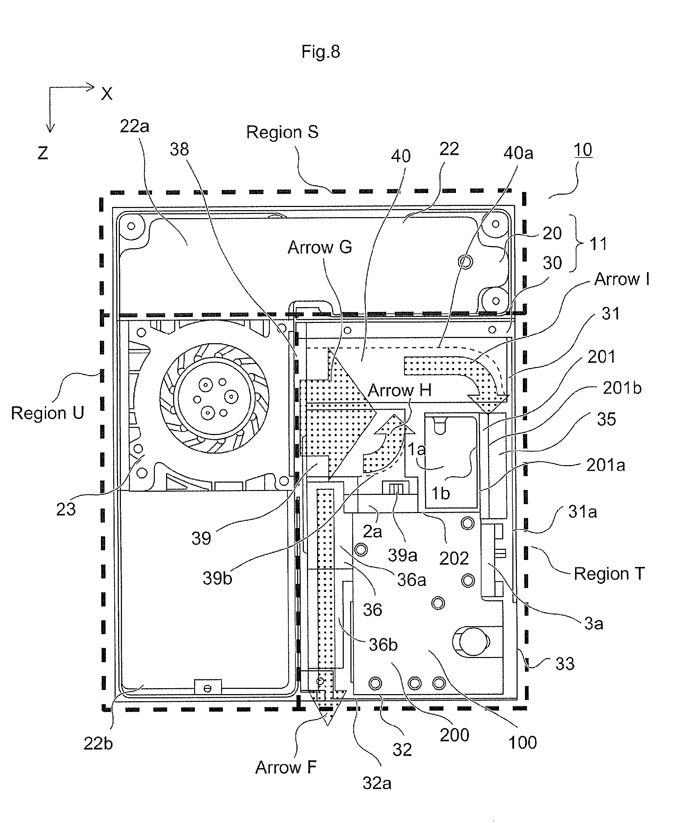

Hereinafter, embodiment 2 of the present invention will be explained with reference to Fig. 8. Fig. 8 illustrates an example of a cooling air passage of the image display apparatus according to embodiment 2 of the present invention. Here, members having similar configuration and feature to embodiment 1 are assigned the same reference numeral, and a detailed explanation is omitted.

The differences between the present embodiment and embodiment 1 are the position of the cooling fan 23, the position and the configuration of the control base, and the position and the configuration of the fins. These differences will be explained below.

As shown in Fig. 8, the cooling fan 23 is provided in the opposite direction of arrow X relative to the opening 38, and releases cooling air to the direction of arrow G. The present embodiment is not provided with the guide 24, and the cooling air from the cooling fan 23 directly cools the fin 34. The inlet ports 21 a, not shown in the drawing, are provided in the upper surface 21 of the fixed portion 20 in the positive direction of arrow Y relative to the cooling fan 23.

According to the present embodiment, the control base 22 is not a single base, but configured by two bases (control base 22a and control base 22b). The control base 22a and the control base 22b are electrically connected between the cooling fan 23 and the fixed portion 20. Although the control base 22a and the control base 22b are physically two bases, they are a single base electrically. The separated control base 22b is supplied with electric power from the electric device such as the PC 300 through the control base 22a. As explained above, since the control base 22 is a single base electrically, the control base 22 is provided to cover a region S and a region U in the present embodiment similarly to embodiment 1.

The fin 39 contacts the red color laser holder 2a, and serves as the heat dissipating portion of the red color laser light source apparatus 2 similarly to the fin 34. As shown in Fig. 8, the fin 39 is configured to be smaller than the fin 34. In the present embodiment, another fin 40 is provided by utilizing a space that is formed by providing the fin 39 instead of the fin 34. The fin 40 contacts the tilted portion 30. The fin 39 has a recessed portion 39a similarly to the recessed portion 34a of the fin 34.

The fin 39 has a staged structure to increase the surface area for heat dissipation. The fin 39 is provided with a guide 39b, shown by a dotted line in Fig. 8, in its internal stage so as to form a cooling air passage. Likewise, the fin 40 has a staged structure to increase the surface area for heat dissipation. The fin 40 is provided with a guide 40a, shown by a dotted line in Fig. 8, in its internal stage so as to form a cooling air passage.

In the image display apparatus 10 of the present embodiment having the above-described configuration, cooling air released in a direction of arrow G from the cooling fan 23 mainly proceeds in a straight extension direction of arrow G (first branch), and at least a part of the cooling air is divided into a direction of arrow F (second branch). At least a part of the cooling air proceeding in the straight extension direction of arrow G is guided into a direction of arrow H by the guide 39b. The cooling air guided into the direction of arrow H is combined with the cooling air flowing in a straight line, through the cooling fan 23, and guided into a guide 40a. The cooling air guided into the guide 40a is guided into a direction of arrow I. This cooling air cools the heat dissipating portions of the green color laser light source apparatus 1 and the blue color laser light source apparatus 3, and is exhausted from the exhaust ports 31a. On the other hand, the cooling air proceeding in the direction of arrow F cools the fin 36, and is exhausted from the exhaust ports 32a. Since the cooling air passage is formed as described above, the present embodiment can achieve a similar effect to embodiment 1.

Further, as explained in embodiment 1, heat generated from the laser light source apparatuses 1-3 of the respective colors finally reaches the tilted portion 30. The fin 40 does not contact the laser light source apparatuses 1-3 of the respective colors, and also receives a lot of cooling air. Consequently, the fin 40 can keep its temperature low. Thus, further heat dissipation can be performed from the tilted portion 30 to the fin 40, which makes it possible to improve the heat dissipation efficiency of the image display apparatus.

According to the present embodiment, it is possible to send air directly to the tilted portion 30 without the guide 24. Consequently, loss of the cooling air by the guide 24 (for example, stray cooling air in the fixed portion 20 without proceeding to the tilted portion 30) hardly occurs, and thereby cooling air can be sent to the tilted portion 30 more securely.

According to the present embodiment, differently from embodiment 1, the cooling air released from the cooling fan 23 is sent to the tilted portion 30 without passing over the control base 22. That is, the fin 39 is cooled without absorbing heat generated from the control base 22. With this, it is possible to cool the fin 39 and the fin 40 more effectively. Incidentally, embodiment 1 and 2 can be combined appropriately.

### Embodiment 3

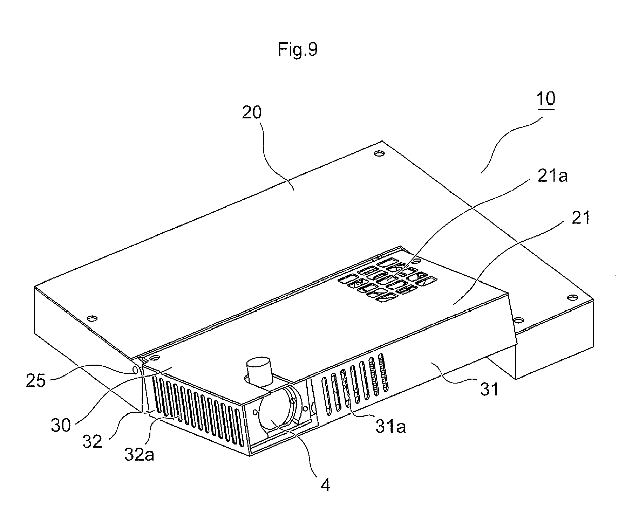

Hereinafter, embodiment 3 of the present invention will be explained with reference to Figs. 9-13. The configuration of the image display apparatus according to embodiment 3 is substantially similar to the configuration of embodiment 1 explained in Fig. 1. The difference is that the cooling fan is provided in the tilted portion.

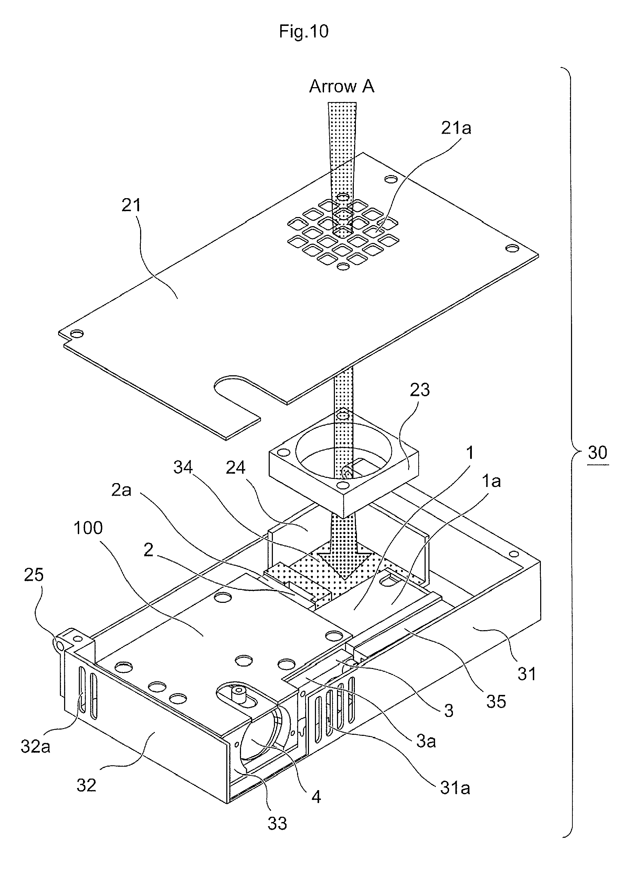

Fig. 9 is a schematic perspective view of a tilted state of the image display apparatus according to embodiment 3 of the present invention. As shown in Fig. 9, the image display apparatus 10 is configured by the fixed portion 20 and the tilted portion 30. The tilted portion 30 is rotatable relative to the fixed portion 20 around a hinge portion (rotation axis) 25. In sum, the tilted portion 30 is rotatable around an axis perpendicular to a direction of projecting images by the image display apparatus main body 100 and a direction A of taking-in cooling air (see Fig. 10) by the cooling fan 23 (see Fig. 10), thereby allowing the projection angle of the projecting lens 4 to be adjusted. The tilted portion 30, that accommodates the cooling fan 23 (see Fig. 10) and the image display apparatus main body 100 (see Fig. 1 and Fig. 10), rotates in a vertical direction around the hinge portion (rotation axis) 25. Consequently, it is possible to prevent an image projected by the projecting lens 4 from reflecting on an installment surface of the image display apparatus 10.

Next, the summary of an internal configuration of the image display apparatus 10 will be explained with reference to Figs. 10-12.

Fig. 10 is a schematic perspective view illustrating the internal configuration of the image display apparatus according to this embodiment of the present invention. As shown in Fig. 10, the tilted portion 30 accommodates the image display apparatus main body 100, the cooling fan 23, the fins, and the like, explained with reference to Fig. 1. The cooling fan 23 shown in Figs. 10-12 has a blowing fan, not shown in the drawings, in a cylindrical portion.

A plurality of air inlet ports 21a are formed on the upper surface 21 of the tilted portion 30. A plurality of exhaust ports 31a are formed on the side surface 31 of the tilted portion 30, and a plurality of exhaust ports 32a are formed in the side surface 32 of the tilted portion 30. The projection port 33 is provided on the side surface 31 of the tilted portion 30 to project an image, and the projecting lens 4 is exposed outside the image display apparatus 10 from the projection port 33. The following explanation will be made considering the air released from the cooling fan 23 as cooling air.

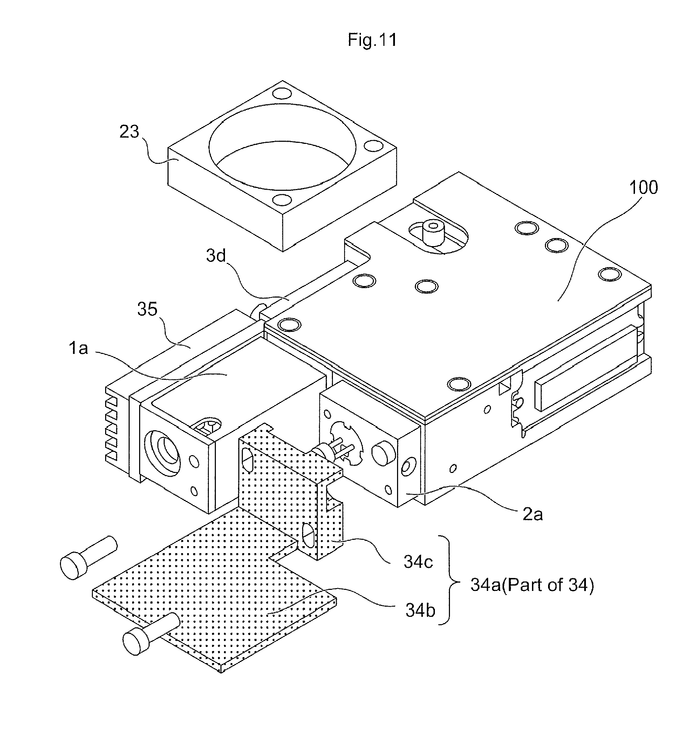

The cooling fan 23 accommodated in the tilted portion 30 takes in and releases cooling air so as to promote heat dissipation inside the image display apparatus 10. The cooling fan 23 rotates when the power is supplied. The cooling fan 23 introduces cooling air from the outside of the image display apparatus 10 through the plurality of air inlet ports 21a side, and send the cooling air in a direction of arrow A. The cooling air flows through a space between the cooling fan 23 and a bottom surface 34b of the fin 34 (see Fig. 11) toward the exhaust ports 31a and 32a, and is exhausted from the exhaust ports 31a and 32a. The heat dissipating portions of the laser light source apparatuses 1-3 of the respective colors, accommodated in the tilted portion 30, are positioned in the cooling air passage of this cooling air, thereby promoting heat dissipation of the laser light source apparatuses 1-3 of the respective colors. Here, the air inlet ports 21a side of the cooling air passage is upstream, and the exhaust ports 31a and 32a side of the cooling air passage is downstream.

In embodiment 3, the air inlet ports 21a is provided on the upper surface of the tilted portion 30. However, the air inlet ports may be provided on a lower surface of the tilted portion 30, and a necessary cooling air passage may be configured by modifying the attachment of the cooling fan and the shape of the fin.

The cooling fan 23 is provided below the air inlet ports 21a (in a vertical direction of the air inlet ports 21a), and attached to the surface where the air inlet ports 21a are provided so as to keep a distance relative to the bottom surface 34b of the fin 34 (see Fig. 11). In other words, the cooling fan is attached between the air inlets 21a and the bottom surface 34b of the fin 34.

Fig. 11 is a schematic perspective view illustrating an internal assembly of the image display apparatus according to this embodiment of the present invention. Generally, the red color laser light source apparatus 2 has the worst temperature characteristics among the laser light source apparatuses 1-3 of the respective colors. The fin 34 is composed of a member having high thermal conductivity. The fin 34 serves as a heat dissipating portion of the red color laser light source apparatus 2, and aids heat dissipation of the red color laser light source apparatus 2. Since the fin 34 is provided to be connected with the red color laser light source apparatus 2, heat generated from the red color laser light source apparatus 2 is transferred to the fin 34. The fin 34 is cooled with the cooling air released from the cooling fan 23. With this, it is possible to promote heat dissipation of the red color laser light source apparatus 2. Also, the fin 34 is configured to increase the heat dissipation area (surface area), which makes it possible to receive the cooling air from the cooling fan 23 with a larger area. With the above configuration, the heat dissipation efficiency of the red color laser light source apparatus 2 can be improved.

A main body 34a of the fin 34 has an L shape, which is configured by the fin bottom surface 34b and an attachment portion 34c to the red color laser holder 2a. The attachment portion 34c is closely-attached to the red color laser holder 2a, and serves to perform heat dissipation of the red color laser light source apparatus attached to the red color laser holder 2a.

The fin bottom surface 34b contacts a bottom of a case of the tilted portion 30, shown in Fig. 10, through a conductive sheet and the like, not shown in the drawing. Heat generated from the red color laser light source apparatus attached to the red color laser holder 2a, shown in Fig. 11, not only is dissipated by the cooling air sent from the cooling fan 23 of Fig. 10, but also is released outside through the bottom of the case of the tilted portion 30. With this, the heat dissipation efficiency of the red color laser light source apparatus 2 can be further improved.

Although it is not shown in Fig. 11, a side wall may be provided in an end portion of the fin bottom surface 34b to oppose a side surface of the cooling fan 23 that does not face the image display apparatus main body 100 as shown in Fig. 10. In this case, heat generated from the red color laser light source apparatus attached to the red color laser holder 2a, and transferred to the side wall of the fin 34, shown in Fig. 10, through the attachment portion 34c and the fin bottom surface 34b of the fin 34 is dissipated by the cooling air blown from the cooling fan 23. It can be expected that the heat dissipation of the red color laser light source apparatus 2, shown in Fig. 11, can be further promoted.

The red color laser holder 2a and the fin 34 are separate members. However, the red color laser holder 2a and the fin 34 may be integrally formed so as to improve the thermal conductivity. The red color laser light source apparatus 2 can easily perform heat dissipation by integrally forming the red color laser holder 2a and the fin 34. With this configuration in which outside air is directly introduced to the fin 34 serving as the heat dissipating portion of the red color laser light source apparatus 2, it is possible to perform heat dissipation more effectively.

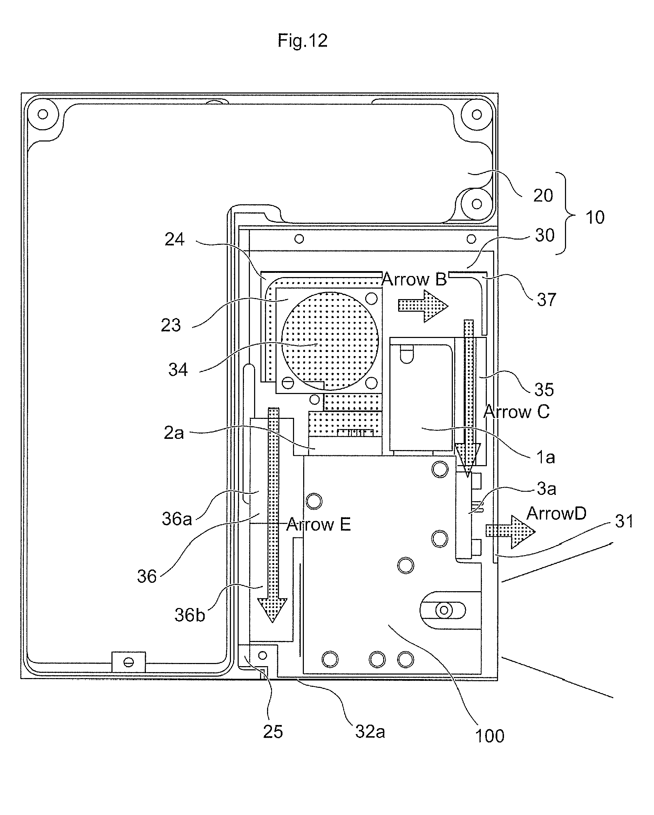

Fig. 12 illustrates an example of a cooling air passage of the image display apparatus according to this embodiment of the present invention. The cooling air introduced in a direction of arrow A from the outside of the image display apparatus 10 through the plurality of air inlet ports 21a by the cooling fan 23 as shown in Fig. 10 is divided into a passage of arrow B, arrow C and arrow D, and a passage of arrow E as shown in Fig. 12.

As described above, the fin 34 serves as a heat dissipating portion of the red color laser light source apparatus 2, and aids heat dissipation of the red color laser light source apparatus 2. The fin 35, that is composed of a member having high thermal conductivity, serves as a heat dissipating portion of the green color laser light source apparatus 1, and aids heat dissipation of the green color laser light source apparatus 1. The fin 35 is also configured to increase the heat dissipation area (surface area), which makes it possible to improve the heat dissipation efficiency of the green color laser light source apparatus 1. With this, the fin 35 promotes the heat dissipation of the green color laser light source apparatus 1.

The fin 36, that is composed of a member having high thermal conductivity, serves as a heat dissipating portion of the image display apparatus main body 100 (in particular, the laser light source apparatuses 1-3 of the respective colors), and aids heat dissipation of the image display apparatus main body 100. The fin 36 has a multi-level stair-step structure which has the higher step portion 36a and the lower step portion 36b. The lower step portion 36b is provided to ensure a space to connect the image display apparatus main body 100 (for example, the spatial modulation element 9). By connecting the spatial modulation element 9 and the control base 22, the control base 22 can control the spatial modulation element 9. With this, it is possible to form an image to be output by the PC 300. In sum, the image display apparatus main body 100 can project an image to be output by the PC 300.

A whole surface of the higher step portion 36a on the image display apparatus main body 100 side contacts the main body case 200. On the other hand, at least a part of a surface of the lower step portion 36b on the image display apparatus main body 100 side contacts the main body case 200, and the contact part of the surface of the lower step portion 36b is on the higher step portion 36a side.

The reason for limiting the surface of the lower step portion 36b that contacts the main body case 200 is to prevent the spatial modulation element 9 from being cooled actively. Regarding the spatial modulation element 9, it is not sufficient to simply keep the temperature low as is the case with the laser light source apparatuses 1-3 of the respective colors. It is preferable to keep the temperature within a predetermined range. For example, when the temperature of the spatial modulation element 9 reaches 50 °C or more, there is a likelihood that burn-in, not to be projected, will occur to an image projected by the projecting lens 4. Also, when the temperature of the spatial modulation element 9 is around 5-10 °C, the reflectivity of the spatial modulation element 9 will be deteriorated. This affects the quality of a projected image.

Thus, in order not to actively cool the spatial modulation element 9, the image display apparatus 10 according to the present embodiment has a configuration where the lower step portion 36b does not contact at least a part of the main body case 200 opposing the spatial modulation element 9. With this, it is possible to prevent the spatial modulation element 9 from being cooled more than necessary.

In embodiment 3, the main body case 200 and the fin 36 are separate. However, it is preferable that the main body case 200 and the fin 36 are integrally formed so as to improve the thermal conductivity. The main body case 200, that is, the laser light source apparatuses 1-3 of the respective colors can easily perform heat dissipation by integrally forming the main body case 200 and the fin 36.

Next, a detailed explanation will be made on the heat dissipation course of the laser light source apparatuses 1-3 of the respective colors with reference to Fig. 12. An explanation will also be made on improvement of heat dissipation in the image display apparatus 10 of the present embodiment based on the above heat dissipation course.

Heat generated from the heat generating portion (semiconductor laser and the like that outputs infrared fundamental laser light) of the green color laser light source apparatus 1 (see Fig. 1) is transferred to the green color laser holder 1a. The heat transferred to the green color laser holder 1a is released from a surface that contacts the cooling air passage. Since the temperature of the fin 36, cooled with the cooling air, is low, the heat transferred to the inside of the main body case 200 is easily transferred to the fin 36. The heat transferred to the fin 36 is dissipated by the cooling air traveling the passage from the cooling fan 23 to arrow B, arrow C, and arrow D.

Heat generated from the heat generating portion (semiconductor laser and the like that outputs red color laser light) of the red color laser light source apparatus 2 is transferred to the red color laser holder 2a. The heat transferred to the red color laser holder 2a is transferred to the fin 34. Since the fin 34 is provided in the cooling air passage, the heat transferred to the fin 34 is absorbed by the cooling air. Regarding the passage of the cooling air, a passage from the cooling fan 23 to arrow E may mainly be used, or it may be combined with another passage from the cooling fan 23 to arrow B, arrow C, and arrow D.

Heat generated from the heat generating portion (semiconductor laser and the like that outputs blue color laser light) of the blue color laser light source apparatus (see Fig. 1) built into the blue color laser holder 3a is transferred to the blue color laser holder 3a. Since the blue color laser holder 3a is provided in the cooling air passage, the heat transferred to the blue color laser holder 3a is absorbed by the cooling air traveling the passage from the cooling fan 23 to arrow B, arrow C, and arrow D.

Naturally, a fin may be provided in the blue color laser holder 3a. The configuration of the fins 34-36 may be a pinholder shape or a staged shape, and is not limited to a particular one.

Heat dissipation of the laser light source apparatuses 1-3 of the respective colors (see Fig. 1) also utilizes the main body case 200 and the fin 36. Since the laser holders 1a-3a of the respective colors contact the main body case 200, heat generated from the laser light source apparatuses 1-3 of the respective colors is transferred to the main body case 200. Further, since the fin 36 contacts the main body case 200, the fin 36 performs heat dissipation of the main body case 200. Also, both of the higher step portion 36a and the lower step portion 36b contact the tilted portion 30. Accordingly, the fin 36 can also perform heat dissipation to the tilted portion 30.

Next, an explanation will be made on a cooling air passage (heat dissipation course) formed between the air inlet ports 21a and the exhaust ports 31a and 32a.

The cooling air passage refers to a course of air in which air taken in from the air inlet ports 21a travels to be exhausted from the exhaust ports 31a and 32a.

The cooling fan 23 attached to the tilted portion 30 takes in outside air from the air inlet ports 21a (see Fig. 10), and introduces cooling air to a direction of arrow A (see Fig. 10). The cooling air from the cooling fan 23 directly cools the fin 34 that is connected with the red color laser holder 2a so as to cool heat generated from the red color laser light source apparatus.

As described above, embodiment 3 has first and second cooling air passages. The first cooling air passage is guided from the cooling fan 23 to arrows B, C, and D in this order, and finally exhausted from the exhaust ports 31a. The second cooling air passage is guided from the cooling fan 23 to arrow E, and finally exhausted from the exhaust ports 32a. Heat dissipation of the laser light source apparatuses 1-3 of the respective colors is promoted by cooling the heat dissipating portions of the laser light source apparatuses 1-3 of the respective colors, interposed in the two cooling air passages, with cooling air. In sum, the temperature increase of the laser light source apparatuses 1-3 of the respective colors can be prevented. Hereinafter, the two cooling air passages will be explained.

As explained above, the cooling fan 23 introduces cooling air in a direction of arrow A. After cooling the fin 34, the cooling air is guided in a direction of arrows B and E by the guide 24. The cooling air passage is divided into the direction of arrow B and the direction of arrow E. The cooling air passage proceeding in the direction of arrow B is a first branch, and the cooling air passage proceeding in the direction of arrow E is a second branch.

First, an explanation will be made on a case where the cooling air passage proceeds in the direction of arrow B (first branch). The tilted portion 30 has the guide 37 in the inside thereof, and the guide 37 guides the cooling air, introduced in the direction of arrow B, in a direction of arrow C. With this, the cooling air reaches the fin 35 and cools the fin 35. Next, the cooling air cools the blue color laser light source apparatus 3 (see Fig. 1) provided between the projecting lens 4 and the fin 35 and built into the blue color laser holder 3a, and is exhausted from the exhaust ports 31a (in a direction of arrow D). As described above, the first cooling air passage is formed in order of arrows A, B, C, and D, and the cooling air absorbs heat of the members interposed in the first cooling air passage.

Next, an explanation will be made on a case where the cooling air passage proceeds in the direction of arrow E (second branch). The cooling air proceeding in the direction of arrow E is cooling air to be guided to the exhaust ports 32a. The cooling air cools the fin 36 so as to promote heat dissipation of the image display apparatus main body 100. The cooling air, which has absorbed heat of the fin 36, is released from the exhaust ports 32a.

As explained above, the first cooling air passage is in order of arrows A, B, C, and D, and the second cooling air passage is in order of arrows A and E. Accordingly, the cooling air flowing through the first cooling air passage cools the heat dissipating portion (fin 34) of the red color laser light source apparatus 2 (see Fig. 1) built into the red color laser holder 2a, the heat dissipating portion (fin 35) of the green color laser light source apparatus 1 (see Fig. 1) built into the green color laser holder 1a, and the heat dissipating portion (blue color laser holder 3a) of the blue color laser light source apparatus 3 (see Fig. 1) built into the blue color laser holder 3a, in this order. The cooling air flowing through the second cooling air passage cools the heat dissipating portion (fin 34) of the red color laser light source apparatus 2 and the fin 36 (image display apparatus main body 100). Specifically, regarding heat dissipation of the laser light source apparatuses 1-3 of the respective colors, priority is given to the red color laser light source apparatus 2 (see Fig. 1) built into the red color laser holder 2a, the green color laser light source apparatus 1 (see Fig. 1) built into the green color laser holder 1a, and the blue color laser light source apparatus 3 (see Fig. 1) built into the blue color laser holder 3a, in this order. With this, it is possible to prevent the quality deterioration of an image in the image display apparatus 10.

As described below, generally, the green color laser light source apparatus 1 requires the largest current value, and has the largest amount of heat generation because the efficiency for converting electricity to light is poor.

According to the present embodiment, therefore, the cooling air passage is formed in the image display apparatus 10 such that priority is given to cooling the green color laser light source apparatus 1 next to the red color laser light source apparatus 2 having the worst temperature characteristics among the laser light source apparatuses 1-3 of the respective colors. In other words, cooling the green color laser light source apparatus 1 is given more priority than the blue color laser light source apparatus 3. Specifically, the heat dissipating portion (fin 35) of the green color laser light source apparatus 1 is cooled with cooling air before absorbing heat of the heat dissipating portion of the blue color laser light source apparatus 3.

A similar effect can be achieved by providing the heat dissipating portion of the blue color laser light source apparatus 3 on the downstream side of the cooling air passage relative to the heat dissipating portions of the green color laser light source apparatus 1 and the red color laser light source apparatus 2.

When the heat dissipating portion of the blue color laser light source apparatus 3 having good temperature characteristics is provided on the downstream side of the cooling air passage, it is possible to control variation in the laser characteristics to a minimum because of the good temperature characteristics of the blue color laser light apparatus 3 even under the influence of heat from the other laser light sources provided in the upstream.

When the heat dissipating portion of the blue color laser light source apparatus 3 is provided on the downstream side of the cooling air passage, it is also possible to prevent heat from diffusing to the upstream side, and control the effect of the heat generated from the blue color laser light source apparatus 3 (see Fig. 1), although being small compared to the others, on the green color laser light source apparatus 1 (see Fig. 1) having a large amount of heat generation or the red color laser light source apparatus 2 having poor temperature characteristics to a minimum.

In connection with providing the heat dissipating portion of the blue color laser light source apparatus 3 on the downstream side of the cooling air passage, a similar effect to the above can be achieved when the cooling air passage is divided into two courses, that is, a cooling air passage running through the air inlet port, the cooling fan, the red color laser light source apparatus 2, the blue color laser light source apparatus 3, and the exhaust port, in this order; and a cooling air passage running through the air inlet port, the cooling fan, the green color laser light source 1, the blue color laser light source apparatus 3, and the exhaust port, in this order, depending on the position of the laser light source apparatuses. Likewise, a similar effect can be achieved when the cooling air passage is divided into two courses, that is, a cooling air passage running through the air inlet port, the cooling fan, the red color laser light source apparatus 2, and the exhaust port, in this order; and a cooling air passage running through the air inlet port, the cooling fan, the green color laser light source 1, and the exhaust port, in this order.

The reason for providing the laser light source apparatuses 1-3 of the respective colors in this order is the same as explained in embodiment 1 and embodiment 2.

According to embodiment 3, as shown in Fig. 12, the fin 34, that serves as the heat dissipating portion of the red color laser light source apparatus 2 (see Fig. 1) built into the red color laser holder 2a, is provided in the vicinity of the cooling fan 23 of the tilted portion 30. Specifically, the fin 34, that serves as the heat dissipating portion of the red color laser light source apparatus 2, is provided on the most upstream side among the laser light source apparatuses 1-3 of the respective colors interposed in the cooling air passages. With this, the cooling air guided into the tilted portion 30 cools the fin 34 that serves as the heat dissipating portion of the red color laser light source apparatus 2 (see Fig. 1) built into the red color laser holder 2a before it cools the fin 35 that serves as the heat dissipating portion of the green color laser light source apparatus 1 (see Fig. 1) built into the green color laser holder 1a, the fin 36 that serves as a heat dissipating portion of the image display apparatus main body 100, and the blue color laser holder 3a. Specifically, the cooling air cools the fin 34 before it absorbs heat of the fin 35, the fin 36, and other members of the tilted portion 30. Further, the fin 34 is cooled with large-volume cooling air before divided into arrow B and arrow E. By forming the cooling air passage in this manner, cooling the heat dissipating portion (fin 34) of the red color laser light source apparatus 2 is prioritized. Consequently, it is possible to preferentially prevent the decrease of output of the red color laser light source apparatus 2 (see Fig. 1). The image display apparatus main body 100 (see Fig. 1) can stably output images of high quality.

Further, an explanation will be made on the reason for giving priority to heat dissipation of the green color laser light source apparatus 1 (see Fig. 1) next to the red color laser light source apparatus 2 (see Fig. 1) with reference to Fig. 7.

With regard to temperature characteristics of the green color laser light source apparatus 1 (see Fig. 1) and the blue color laser light source apparatus 3 (see Fig. 1), as seen from Fig. 7, the upper limits of the used temperature of the laser light source apparatuses are substantially similar. However, generally, the green color laser light source apparatus 1 (see Fig. 1) requires the largest current value among the laser light source apparatuses 1-3 of the respective colors. As described above, the green color laser light source apparatus 1 (see Fig. 1) mainly outputs green color laser light by converting infrared fundamental laser light. Specifically, laser light emitted from the semiconductor laser passes through various elements (for example, SHG element) before it is converted into green color laser light. Since this causes light loss, the efficiency for converting electricity to light is worse in the green color laser light source apparatus 1 (see Fig. 1) than the red color laser light source apparatus 2 (see Fig. 1) and the blue color laser light source apparatus 3 (see Fig. 1). In sum, the green color laser light source apparatus 1 requires a larger amount of electricity to generate a predetermined amount of output than the red color laser light source apparatus 2 (see Fig. 1) and the blue color laser light source apparatus 3 (see Fig. 1). In general, the green color laser light source apparatus 1 (see Fig. 1) thus has the larger amount of heat generation among the laser light source apparatuses 1-3 of the respective colors. Consequently, heat generated from the green color laser light source apparatus 1 (see Fig. 1) is transferred to the protrusion 201 (see Fig. 1) (i.e., transferred to the main body case 200 (see Fig. 1)), which may cause temperature increase of the red color laser light source apparatus 2 (see Fig. 1) and the blue color laser light source apparatus 3 (see Fig. 1). In such a case, the output of the red color laser light source apparatus 2 (see Fig. 1) and the blue color laser light source apparatus 3 (see Fig. 1) is further decreased.

According to the present embodiment shown in Fig. 12, therefore, the image display apparatus 10 is configured and the cooling air passage is formed such that priority is given to cooling the green color laser light source apparatus 1 (see Fig. 1) next to the red color laser light source apparatus 2 (see Fig. 1). In other words, cooling the green color laser light source apparatus 1 (see Fig. 1) is given more priority than the blue color laser light source apparatus 3 (see Fig. 1). The heat dissipating portion (fin 35) of the green color laser light source apparatus 1 (see Fig. 1) is cooled with cooling air before absorbing heat of the blue color laser light source apparatus 3 (see Fig. 1).

As shown in Fig. 12, the air blower, the three laser light sources, and the like, are attached within the rotatable movable member (tilted portion 30). Consequently, when the image display apparatus is used by being attached to a personal computer (hereinafter, "PC") with being rotated, the movable member is in the outside, and thereby can take in outside air and use it immediately without loss in any rotation position. Also, the distance of the cooling air passage is short, without considering connection of the cooling air passage between the fixed portion 20 and the tilted portion 30, compared to an apparatus in which the air blower is provided in the fixed portion 20 and the air passage is formed by introducing cooling air into the tilted portion 30. Consequently, efficient cooling can be achieved. With this, it is possible to prevent the decrease of output of the green color laser light source apparatus and the red color laser light source apparatus even when the image display apparatus is used for a long period of time, and thereby stably obtain output of three color laser light.

Also, the air blower can cool the heat dissipating portion of the red color laser light source before it absorbs heat of the green color laser light source and the blue color laser light source. In sum, top priority is given to cooling the red color laser light source having the worst temperature characteristics. Therefore, heat dissipation of the red color laser light source is particularly promoted, and temperature increase of the red color laser light source is particularly controlled. Consequently, it is possible to prevent the decrease of output of the red color laser light source apparatus even when the image display apparatus is used for a long period of time, and thereby stably obtain output of three color laser light. Also, since the air inlet port and the air blower are installed in the case integrally provided with the image display apparatus main body, outside air can be used efficiently for heat dissipation without loss, and heat dissipation of the heat dissipating portion of each laser light source can be performed well due to the short cooling air passage.

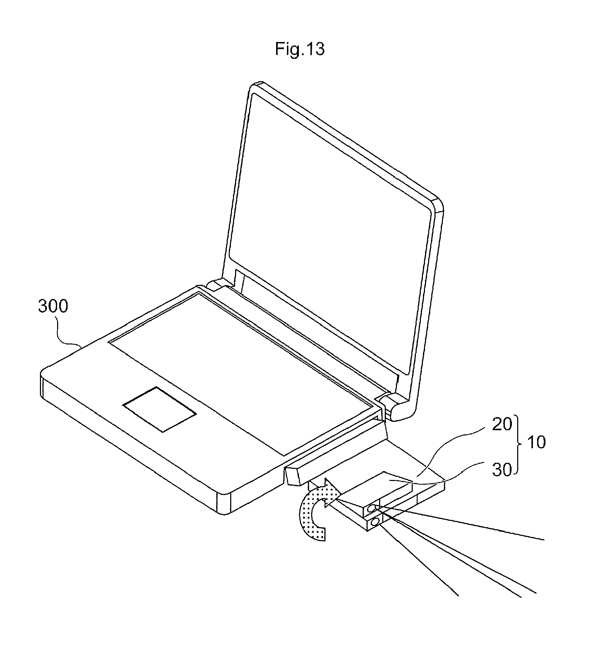

Fig. 13 illustrates an example where the image display apparatus according to this embodiment of the present invention is incorporated in an electronic device. The image display apparatus 10 of embodiment 3 may be used as a single body. Alternatively, it may be attached to the PC 300 that is an electronic device as shown in Fig. 13. The image display apparatus 10 can be ejected or retracted with respect to the PC 300 as needed, and the image display apparatus 10 can project displayed output of the PC 300 to a screen, a wall, and the like. Consequently, it is possible to easily project displayed output of the PC 300 to a large screen without connecting a separate image display apparatus to the PC 300 via a wire and the like. The cooling fan 23 and the elements needed as a display apparatus such as the image display apparatus main body 100 and the like are installed in the tilted portion 30. Consequently, when the image display apparatus is attached to the PC 300, for example, only the tiled portion 30 may be ejected to the minimum. In this case, there is an advantage that a large space is not required for operation.

The attachment position of the image display apparatus 10 to the PC 300 is not limited to the right side surface as shown in Fig. 13. The image display apparatus 10 may be attached to the left side surface, the rear side surface, the front surface, and the like.

When the image display apparatus 10 is incorporated in the PC 300 (electronic device), the tilted portion 30 only needs to protrude outside the PC 300 so as to freely rotate. Thus, at least a part of the fixed portion 20 needs to be fixed to the PC 300, and a surface side of the fixed portion 20 opposite to the side surface 31 may be fixed to the PC 300.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image display apparatus comprising:
a case that has an air inlet port and an exhaust port;
a cooling air passage that is formed by connecting the air inlet port and the exhaust port;
an optical unit that is provided within the case, the optical unit comprising a red color laser light source, a green color laser light source, and a blue color laser light source that are positioned in the cooling air passage;
an air blower that cools the laser light sources of the respective colors by introducing air from the air inlet port and exhausting air from the exhaust port; and
a lens that is provided on the light-emitting side of the laser light sources,
wherein the red color laser light source is positioned closer to an upstream side of the cooling air passage than the green color laser light source and the blue color laser light source.

2. The image display apparatus according to claim 1, wherein the green color laser light source is positioned closer to the upstream side of the cooling air passage than the blue color laser light source.

3. The image display apparatus according to claim 2, wherein each of the laser light sources of the respective colors comprise a first fin as a heat dissipating portion, and the fins are provided in the cooling air passage.

4. The image display apparatus according to claim 2, wherein the red color laser light source and the green color laser light source are provided in the cooling air passage of a straight line.

5. The image display apparatus according to claim 3, wherein a second fin, that is different from the first fins, is provided in the case to dissipate heat inside the case.

6. The image display apparatus according to claim 5, wherein the cooling air passage is divided into a first branch and a second branch, the first fins of the laser light sources of the respective colors are provided in the first branch, and the second fin is provided in the second branch.

7. The image display apparatus according to claim 6, wherein the area of an opening portion of the first branch is larger than that of an opening portion of the second branch, and air generated from the air blower passes through the opening portions.

8. An image display apparatus comprising:
a first case that has an air inlet port;
a second case that has an exhaust port, the second case being rotatably provided to the first case;
a cooling air passage that is formed by connecting the air inlet port and the exhaust port;
an optical unit that is provided within the second case, the optical unit comprising a red color laser light source, a green color laser light source, and a blue color laser light source that are positioned in the cooling air passage;
an air blower that cools the laser light sources of the respective colors by introducing air from the air inlet port and exhausting air from the exhaust port, the air blower being provided in the first case; and
a lens that is provided in the second case on the light-emitting side of the laser light sources,
wherein the red color laser light source is positioned closer to an upstream side of the cooling air passage than the green color laser light source and the blue color laser light source.

9. The image display apparatus according to claim 8, wherein the green color laser light source is positioned closer to the upstream side of the cooling air passage than the blue color laser light source.

10. The image display apparatus according to claim 8, wherein the first case further comprises a control base.

11. The image display apparatus according to claim 8, wherein the second case is provided to the first case rotatably around a hinge portion.

12. An image display apparatus comprising:
a first case;
a second case that has an air inlet port and an exhaust port, the second case being rotatably provided to the first case;
a cooling air passage that is formed by connecting the air inlet port and the exhaust port;
an optical unit that is provided within the second case, the optical unit comprising a red color laser light source, a green color laser light source, and a blue color laser light source that are positioned in the cooling air passage;
an air blower that cools the laser light sources of the respective colors by introducing air from the air inlet port and exhausting air from the exhaust port, the air blower being provided in the second case; and
a lens that is provided in the second case on the light-emitting side of the laser light sources,
wherein the red color laser light source is positioned closer to an upstream side of the cooling air passage than the green color laser light source and the blue color laser light source.

13. The image display apparatus according to claim 12, wherein the green color laser light source is positioned closer to the upstream side of the cooling air passage than the blue color laser light source.

14. The image display apparatus according to claim 12, wherein the first case further comprises a control base.

15. The image display apparatus according to claim 12, wherein the second case is provided to the first case rotatably around a hinge portion.
